# EUROPEAN PATENT SPECIFICATION

(11) **EP 4 278 287 B1**
(45) Date of publication and mention of the grant of the patent: **29.07.2026**
(21) Application number: 22703535.9
(22) Date of filing: 18.01.2022
(51) Int. Cl.: G06F 21/57, H04L 9/40

(54) **WEB ATTACK SIMULATOR**
WEBANGRIFFSSIMULATOR
SIMULATEUR D'ATTAQUE WEB

(30) Priority: 18.01.2021 IN 202141002185; 02.03.2021 US 202163155464 P; 27.08.2021 US 202117460004; 27.08.2021 WO PCT/US2021/048077
(43) Date of publication of application: 22.11.2023
(73) Proprietor: Virsec Systems, Inc., San Jose CA 95110 (US)
(72) Inventor: GUPTA, Satya V., San Jose, CA 95110 (US); AHUJA, Rohan, Bengaluru, Karnataka 560102 (IN); TOMMANDRU, Mahendra Nath, Bengaluru, Karnataka 560102 (IN); GHOSH, Joyanto, Bengaluru, Karnataka 560102 (IN); DIXIT, Vishal, Bengaluru, Karnataka 560102 (IN); SABU, Ebin, Bengaluru, Karnataka 560102 (IN)
(74) Representative: Cobbold, Alistair John
(86) International application number: PCT/US2022/070236
(87) International publication number: WO 2022/155685

(56) References cited:
- WO-A1-2016/130372
- US-A1- 2014 082 735
- US-A1- 2020 336 507
- NIKOLAOS KOUTROUMPOUCHOS ET AL: "ObjectMap", INFORMATICS, ACM, 2 PENN PLAZA, SUITE 701NEW YORKNY10121-0701USA, 28 November 2019 (2019-11-28), pages 67 - 72, XP058445161, ISBN: 978-1-4503-7292-3, DOI: 10.1145/3368640.3368680

## Description

### BACKGROUND

With each passing day, cyber-attacks are becoming increasingly sophisticated. Attacks are often targeted to exploit specific vulnerabilities in specific programs, processes, and applications. Various methods and tools exist for identifying vulnerabilities, but these existing methods and tools are inadequate.

US 2014/082735 Al describes black-box security testing for a Web application that includes identifying infrastructure supporting the Web application, obtaining vulnerability data for the Web application from an external data source according to the infrastructure, deriving a test payload from the vulnerability data using a processor, and determining a type of vulnerability exploited by the test payload. An existing validation operation of a testing system is selected for validating a response from the Web application to the test payload according to the type of vulnerability.

WO 2016/130372 Al describes systems and methods for automated selection of payloads for use in a security scan of a web application by a security scanner. The systems and methods test potential payloads for a security scan of a given web application on a test application with known security vulnerabilities, evaluate valid response returned by this test application, determine functionally equivalent responses, group payloads based the equivalence of their valid responses, and select one or more payloads from each created group for use in the security scan of the given web application.

NIKOLAOS KOUTROUMPOUCHOS ET AL: "ObjectMap", INFORMATICS, ACM, describes ObjectMap, an extendable tool for the detection of deserialization and object injection vulnerabilities in Java and PHP based web applications. The authors also introduce a deserialization test environment which can be used to test deserialization vulnerability detection tools and for educational purposes.

US 2020/336507 Al describes a technique for performing penetration testing. The technique includes generating, based on reconnaissance data collected from an environment, a set of potential attack vectors for the environment. The technique also includes classifying a subset of the potential attack vectors as viable attack vectors for the environment based on features associated with the set of potential attack vectors. The technique further includes applying a generative model to the viable attack vectors to produce a set of payloads for the viable attack vectors. Finally, the technique includes dispatching the set of payloads to the environment to assess security vulnerabilities in the environment.

### SUMMARY

Embodiments provide improved systems, methods, and computer program products for identifying vulnerabilities in programs, processes, and applications as defined in the appended claims.

### BRIEF DESCRIPTION OF THE DRAWINGS

The foregoing will be apparent from the following more particular description of example embodiments, as illustrated in the accompanying drawings in which like reference characters refer to the same parts throughout the different views. The drawings are not necessarily to scale, emphasis instead being placed upon illustrating embodiments.
FIG. 1 is a flow diagram of a method for identifying security vulnerabilities according to an embodiment.
FIG. 2 is a simplified block diagram of a system for identifying vulnerabilities according to an embodiment.
FIG. 3 illustrates an example crawling and parsing state machine that may be implemented in embodiments.
FIG. 4 depicts a fuzzing state machine according to an embodiment.
FIG. 5 is a block diagram of a system for identifying vulnerabilities in an application according to an embodiment.
FIG. 6 illustrates how embodiments can interact with continuous integration / continuous development (CICD) pipelines.
FIG. 7 illustrates a computer network or similar digital processing environment in which embodiments may be implemented.
FIG. 8 is a diagram illustrating an example internal structure of a computer in the environment of FIG. 7.

### DETAILED DESCRIPTION

A description of example embodiments follows. Embodiments provide improved functionality to detect security vulnerabilities in applications.

Fuzzing is a technique whereby data is provided to programs and applications to determine how the programs and applications respond to the data. Fuzzing can be used to determine if programs and applications are susceptible to vulnerabilities. Most contemporary fuzzing solutions use brute force and often nonsensical payloads for fuzzing. Existing fuzzing methodologies have very poor code coverage because they rely on automated crawlers that are unable to exercise applications. The problem is even further exacerbated when these existing fuzzing tools have to exercise each URL and parameter multiple times.

Embodiments, which may be referred to herein as "Web Attack Simulator" (WAS), can crawl and store uniform resource locators (URLs), add, and fire high complexity and common weakness enumeration (CWE) classified payloads into applications. By firing Hypertext Transfer Protocol (HTTP) requests into target applications, and then gathering and analyzing vulnerable parameters, headers, and data on a per URL basis, embodiments can test applications and determine if the applications include vulnerabilities.

Embodiments can generate payloads based on HTTP specifications for all specified web application vulnerabilities on an interactive basis. Embodiments can also be deployed to test each vulnerability by fuzzing each parameter (including DOM based parameters) in GET and POST request methods of the applications and fuzz the HTTP headers according to the Request For Comments (RFCs) described at https://www.globalknowledge.com/us-en/resources/resource-library/articles/whats-an-rfc-and-what-can-they-do-for-me/#gref. Embodiments can also fuzz cloud enabled applications that are built around Representational state transfer (RESTful) application programming interfaces (APIs).

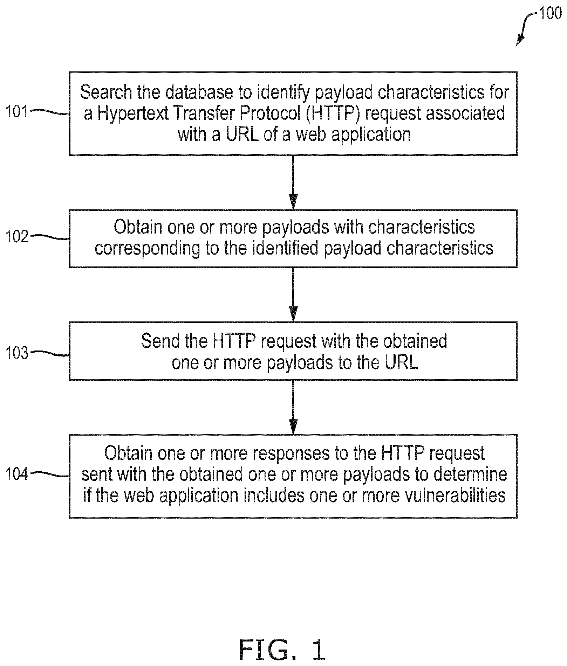

FIG. 1 is a flow diagram of a method 100 for identifying vulnerabilities in a web application according to an embodiment. The method 100 is computer implemented and, as such, may be implemented using any computing device, or combination of computing devices known in the art. Further, the method 100 may be implemented as part of a continuous integration continuous deployment (CICD) pipeline.

The method 100 starts at step 101 by searching a database to identify payload characteristics for a HTTP request associated with a URL of a web application. According to an embodiment, the HTTP request is at least one of: a get type request and a post type request. The searching 101 may be triggered automatically or triggered pursuant to a user request to determine if a web application includes one or more vulnerabilities. According to an embodiment of the method 100, searching 101 the database to identify payload characteristics for the HTTP request comprises searching the database for an HTTP response that occurred prior to the HTTP request and identifying the payload characteristics based upon the HTTP response that occurred prior to the HTTP request. In an embodiment, the payload characteristics may be identified based upon HTML content of the HTTP response that occurred prior to the HTTP request. Further, according to an embodiment of the method 100, the HTTP response is immediately prior to the HTTP request in hierarchical or sequential operation of the web application.

In an embodiment of the method 100, the payload characteristics may be any such characteristics known in the art. According to one such embodiment, the payload characteristics identified at step 101 include at least one of: type and format.

Next, at step 102, the method 100 obtains one or more payloads with characteristics corresponding to the identified payload characteristics. According to an embodiment of the method 100, obtaining 102 the one or more payloads with characteristics corresponding to the identified payload characteristics comprises searching a payload database based on the identified payload characteristics to obtain the one or more payloads with characteristics corresponding to the identified payload characteristics. Such functionality may include querying the payload database using the identified payload characteristics. The obtained 102 payloads may be any payloads known in the art. For example, in one such implementation, a given payload of the obtained one or more payloads is a CWE payload.

In an embodiment, each payload obtained at step 102 corresponds to a respective vulnerability. As such, embodiments of the method 100 can be configured to obtain 102 payloads for testing for particular vulnerabilities. In such implementations, vulnerability specific payloads can be obtained that target each input field for the HTTP request. To illustrate, at step 102, a payload may be obtained 102 for testing for a SQL injection attack and a payload may be obtained 102 for testing for an operating system (OS) command injection attack. Such payloads may include data for each variable in the HTTP request where, in one instance, said data tests for a SQL injection attack, and in another instance, said data tests for an OS command injection attack.

To continue, at step 103, the HTTP request is sent with the obtained one or more payloads to the URL. In this way, the method 100 can fuzz many variables, e.g., payloads, at a time. This results in the method 100 providing significant efficiency improvements compared to existing methods. It is noted above that in an embodiment of the method 100, the one or more payloads obtained at step 102 can corresponds to a respective vulnerability. When the HTTP request is sent with such one or more payloads, the method 100 is testing if the web application is susceptible to said respective vulnerabilities.

At step 104 the method 100 observes one or more responses to the HTTP request sent with the obtained one or more payloads to determine if the web application includes one or more vulnerabilities. These observed responses can be any responses that result from sending the HTTP request with the one or more payloads. For instance, the one or more responses can be HTTP responses, database responses, and interpreter responses, amongst other examples.

Embodiments of the method 100 may go further than observing 104 responses and may perform one or more protection, compensation control, or remediation, actions in response to determining the web application includes one or more vulnerabilities. Amongst other examples, embodiments of the method 100 may generate a report indicating results of the observing. Such a report can indicate one or more elements of the web application that are susceptible to the one or more vulnerabilities. These elements can include fields, variables in request lines, parameters passed with a request line, and parameters passed through headers. In this way, embodiments can provide forensic/contextual evidence of the problematic parameters, e.g., fields in the HTTP request that are attackable and the exact payloads that escape the validation scrutiny of the business logic. This forensic/contextual information presents highly actionable remediation information which can drastically cut time to market for applications.

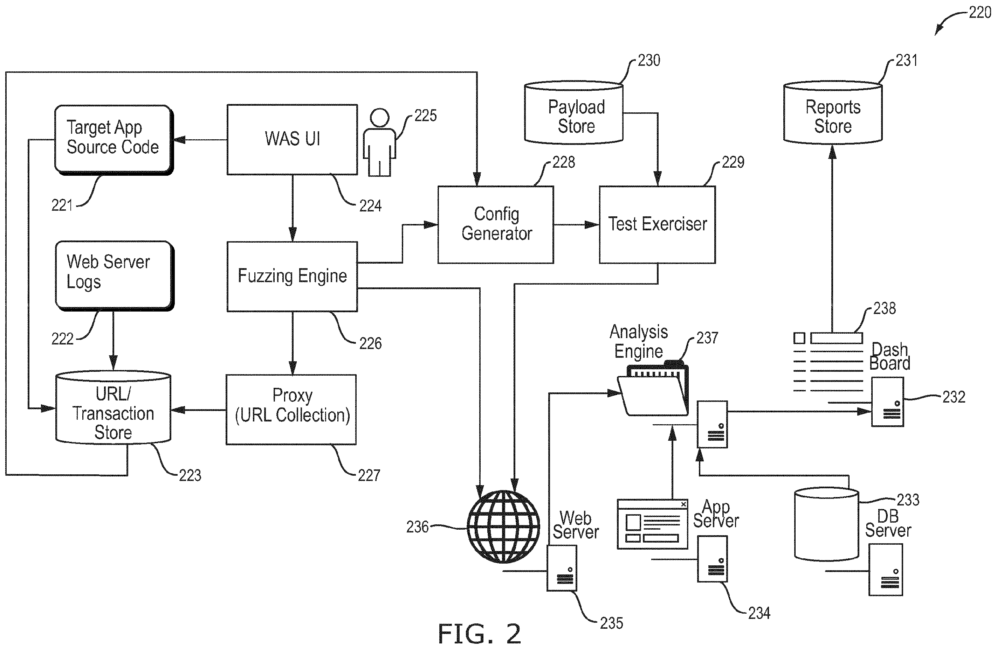

FIG. 2 is a block diagram of a system 220, e.g., WAS, for identifying vulnerabilities in applications.

The system 220 utilizes a URL/transaction store 223 to store the application URLs/transactions that may be tested for vulnerabilities. The URL/transaction store 223 may be populated using any desired technique.

In an implementation of the system 220, the fuzzing engine 226 identifies the fuzz-able fields in the URLs that make up application(s) being tested, by either crawling through the application (provided using the web server 235, application server 234, and database server 233 and accessed via the network 236) and discovering more URLs, or by extracting the URLs from the code 221 or by post processing the web logs 222 of a deployed instance of the application. Some URLs may require manual crawling since their parameters may require contextual input that only a human can provide. In some cases, it is possible to read the form scripts and extract what parameters are expected by the JavaScript. This can help in adding more dynamically generated URLs. In another embodiment, to crawl an application, several parameters are configured. These may include started URL(s), application login credentials, and framework login credentials, amongst other examples. All such configuration information is saved in the config generator 228.

Regardless of how they are discovered, in the system 220, all discovered URLs are saved in the URL store 223. The URL store 223 is the repository of all the URLs and parameters collected by the various means described above. The URL store 223 may include various information about each URL, including each URL's request line, headers, and actual HTTP data. Users can also record "transactions" which are a collection of URLs that collectively achieve some user story such as placing shirts in a cart and then paying for the shirt on the checkout page. The system 220 user interface 224 allows the user 225 to add, modify, and/or delete individual URLs and parameters in the URL transaction store 223.

At some point in time, the system 220, e.g., via user initiation, can begin exercising the application with highly crafted malicious payloads by mixing the parameters of each URL with payloads from the payload store 230. In an example implementation, the test exerciser 229 withdraws application specific URLs or transactions from the URL store 223. In an embodiment, the fuzzing engine 226, via the proxy 227, obtains a URL from the URL store 223. The fuzzing engine 226, communicates the URL to the configuration generator 228. The configuration generator 228 determines the appropriate configuration for the URL and the associated payloads, e.g., format, etc. For example, the configuration generator 228 may look at URL, e.g., HTTP data, data stored in the URL store 223 and determine the type of payload data to be accessed to test the URL. In an embodiment, payloads correspond to particular vulnerabilities and, as such, a payload may be obtained for each vulnerability to be tested for. The test exerciser 229 then obtains payloads from the payload store 230 that conform with the configuration determined by the configuration generator 228.

At this stage, the test exerciser 229 has a URL with proper payload(s) and plays the URL with the payloads into the application's front end or Web Server 235 via the network 236. As the application's HTTP pipeline ingests the payload, strategically placed instrumentation in the web server 235, the application server 234, and the database server 233 identify relevant runtime instrumentation data and forward it to the analysis engine 237.

The analysis engine 237 deduces precisely if an attack is in progress or not. If an attack is detected, the analysis engine 237 reports it to a user or any desired computing device, e.g., a central monitoring system implemented with the device 232 and code/data 238, from where the system 220 picks up details. The system 220 can do so because the test exerciser 229 places an identifying HTTP header into the input payload. This special header is reported by the analysis engine 237. This allows the system 220 to match the inserted payload and parameter to the attack outcome detection. The results of the analysis engine 237 are collected into a JSON report and pushed into the reports database 231 from where, using an API, a user can access the results programmatically in the dashboard 232 (which is part of a central monitoring system). Since the system 220 knows exactly what payload, e.g., CWE is exercised, the system 220 is in a position to assign a CVSSv2/ 3 score to each vulnerability it can detect.

Embodiments can perform full or partial scans of an application. In an embodiment, e.g., the system 220, the test exerciser 229, is used to perform said scans. Partial scans are particularly useful to a software developer if they wish to verify a bug they may have fixed.

As referenced above, embodiments can utilize a URL store, e.g., the URL store 223. In an embodiment, the URL store is populated by crawling a target application to discover all the URLs in the application. The state machine 330 shows the details of a crawling operation that may be employed in embodiments.

The state machine 330 begins in initial state 334 and, then, crawls a target application to discover all the URLs 331 in the application. The state machine 330 aims to crawl and discover all the URLs 331 in the application and store them in the URL store for fuzzing them later. The crawling functionality can obtain URLs from variegated sources to achieve a high WIVET score and thoroughly test the application. The crawler 330 can utilize credentials 341 with various open-source crawlers, e.g., Burp 332 and ZAP 333, for automatic crawling. The automatic crawling effectively collects data for the variable types to give the right input to discover connected URLs. This reduces the chance of loss of connected URL due to a bad request caused by non-compliant input. Additionally, embodiments provide the capability to upload the application's web server 335 and proxy logs 336 to extract more URLs. The state machine 330 processes and parses 337 the URLs from all these sources into the WAS URL format (JSON format 338) and stores them in the URL store 339. These URLs are later utilized by the Test Exerciser to fuzz them with payloads and discover the vulnerabilities.

In an embodiment that performs crawling functionality, the various URLs visited by the crawler are extracted and saved into a format, e.g., JSON, for storing into a URL database, e.g., the URL store 223. The state machine 330 shows one such example embodiment of this functionality. In the state machine 330 application URLs are obtained from various sources and formats, as described above. The multiple URLs visited by the crawler are extracted and saved into an embodiment, e.g., WAS, understandable JSON format 338 for fuzzing them later. The unique WAS parser 337 ingests the URLs obtained from sources such as the opensource crawlers 332, 333, web server logs 335, and proxy logs 336. The parser 337 converts them into a JSON format 338 that the WAS Test Exerciser can utilize. After being converted to the JSON format 338, the URLs are stored in the URL store 339. Further, if obtained URLs cannot be converted to the JSON format 338 or if errors occur during the conversion, the parser moves to an error state 340.

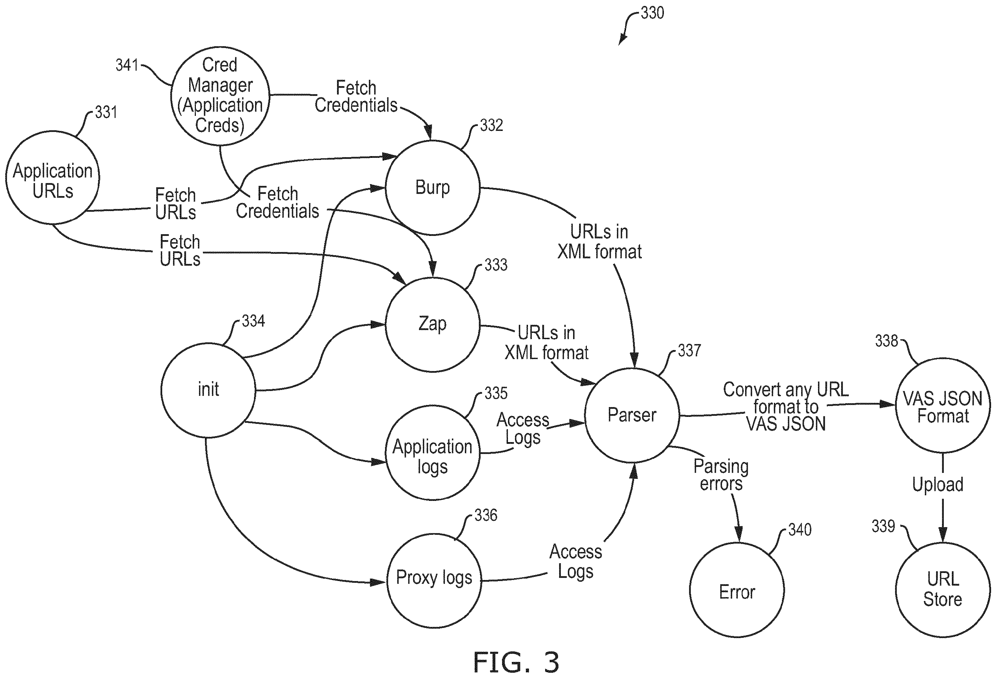

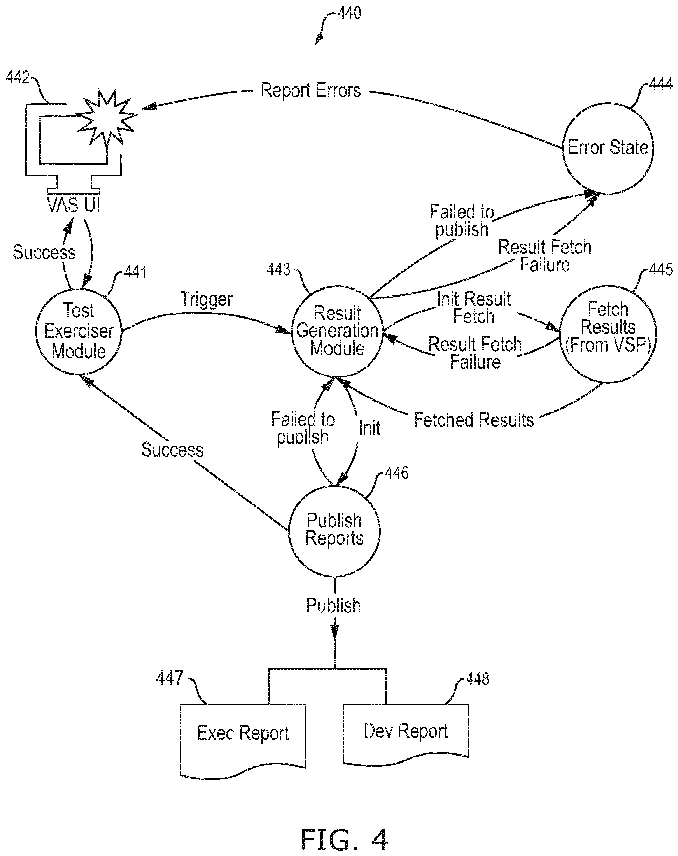

FIG. 4 depicts a fuzzing state machine 440 according to an embodiment. In an embodiment, the state machine 440 is implemented in the test exerciser 229 described hereinabove in relation to FIG. 2. In the state machine 440 the Test Exerciser 441 performs the fuzzing on application URLs, which may be obtained from crawling with the CAPEC based payloads, as described hereinabove in relation to FIG. 3. The test exerciser 441 discovers vulnerabilities, and publishes actionable reports. In this way, embodiments can exercise every parameter of every URL in the URL store against highly sophisticated CAPEC based attack vectors and comprehensively test the application. The Test Exerciser 441 can perform a full scan or a partial scan. A partial scan fuzzes a limited/selected set of URLs that is especially beneficial to a developer if they wish to verify a bug they may have fixed.

In an embodiment of the state machine 440, once the Test Exerciser Module (441) is ready, this status is returned to the WAS UI (442). A user on the WAS UI 442 can then exercise the option to generate a post-attack report for a previously fuzzed application. At this point, the WAS state advances from 441 to the Result Generation Module (443).

Upon collating the data, the WAS attempts to connect to the CMS to fetch the results. In case the communication cannot be established, the WAS state advances from 443 to the Error State (444) and upon generating the appropriate error notification (440), the WAS returns to the Result Generation Module (443).

If the communication with the CMS is successfully established, WAS advances from 443 to the Fetch Results State (445). If there is any issue in the results, the WAS goes back from 445 to 443 with details of the error. If the test results are not in error, the WAS goes back from 445 to 443 with a success report.

On receiving the test results in raw format, WAS goes from 443 to the Publish Reports State (446) where results are published in one of two formats, the Executive Report Format (447) or the Developer Report (448). In case the report cannot be published successfully, 446 reports to 443 which reports to 444. If the report can be successfully generated, 446 advances back to the idle 441 state.

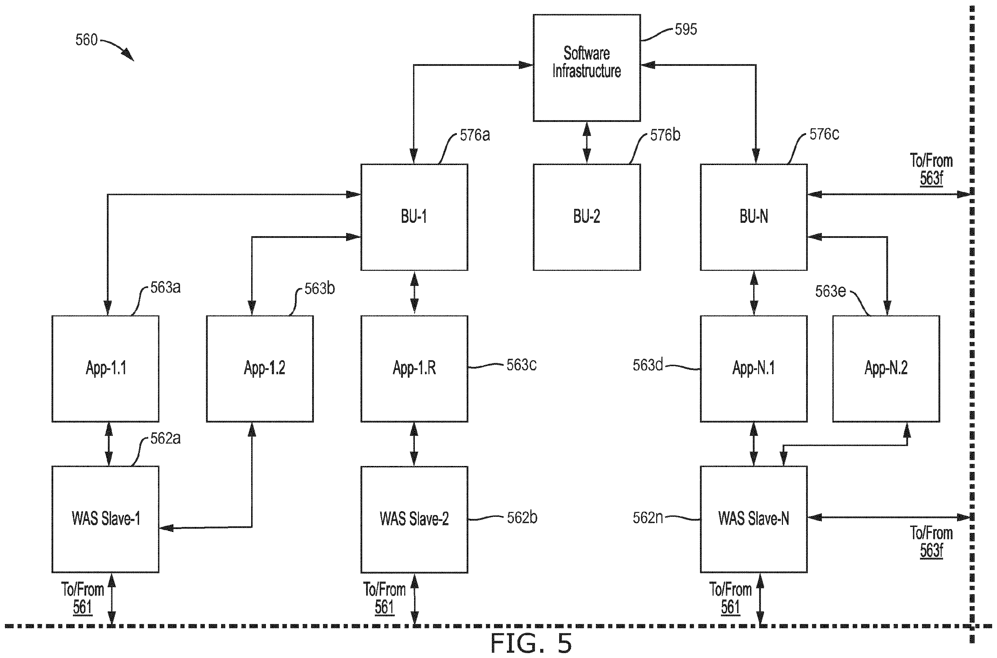

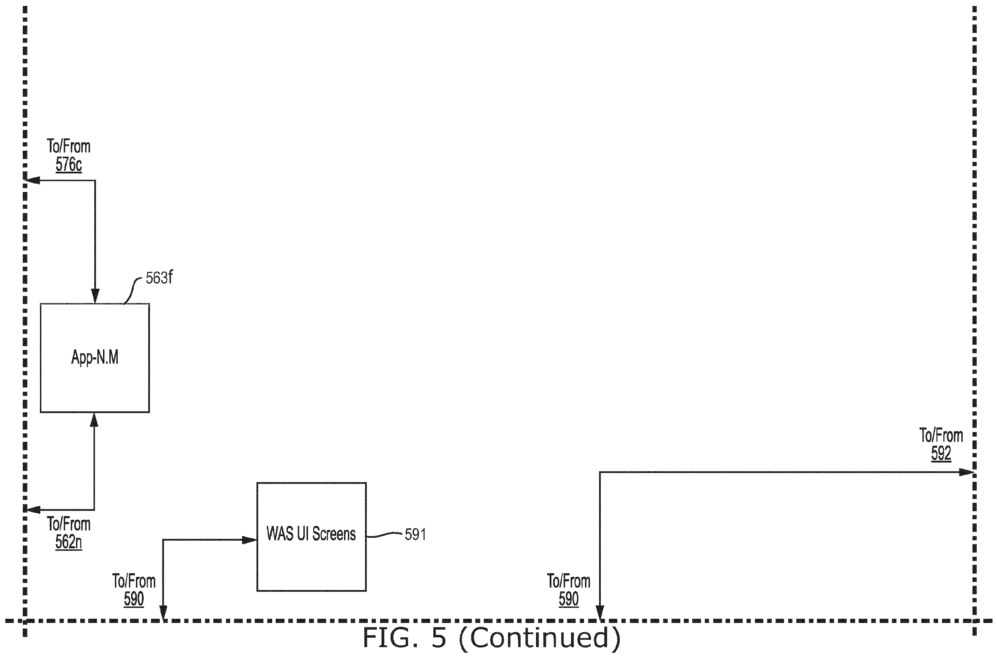

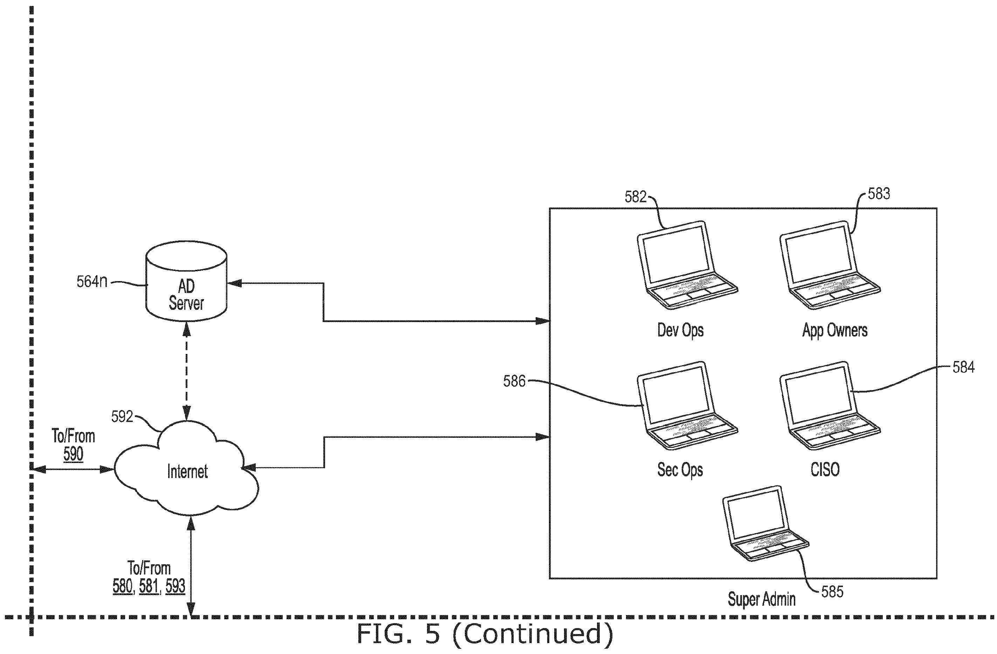

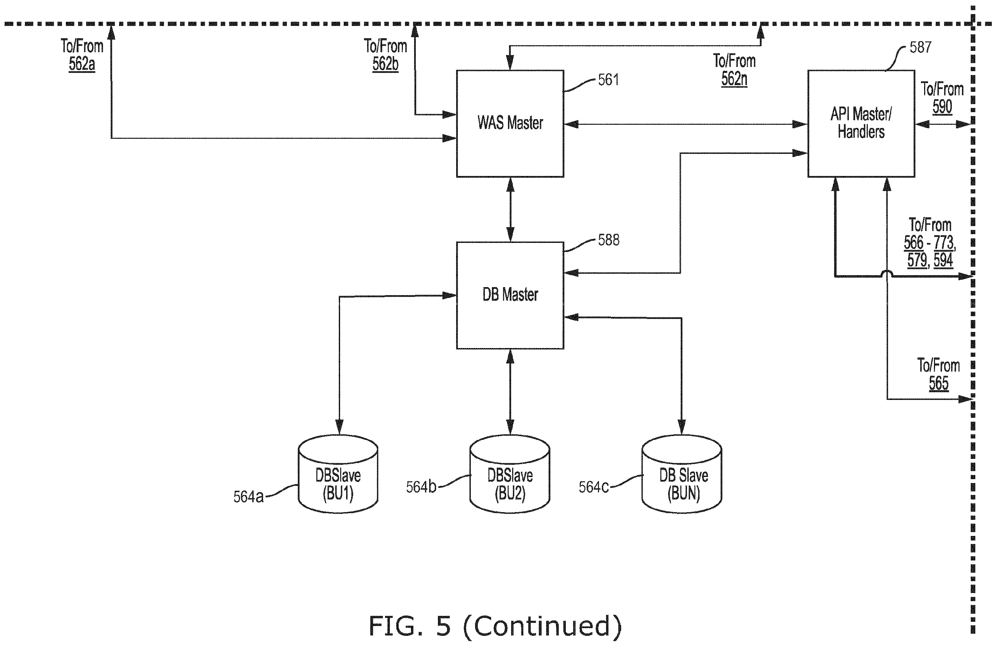

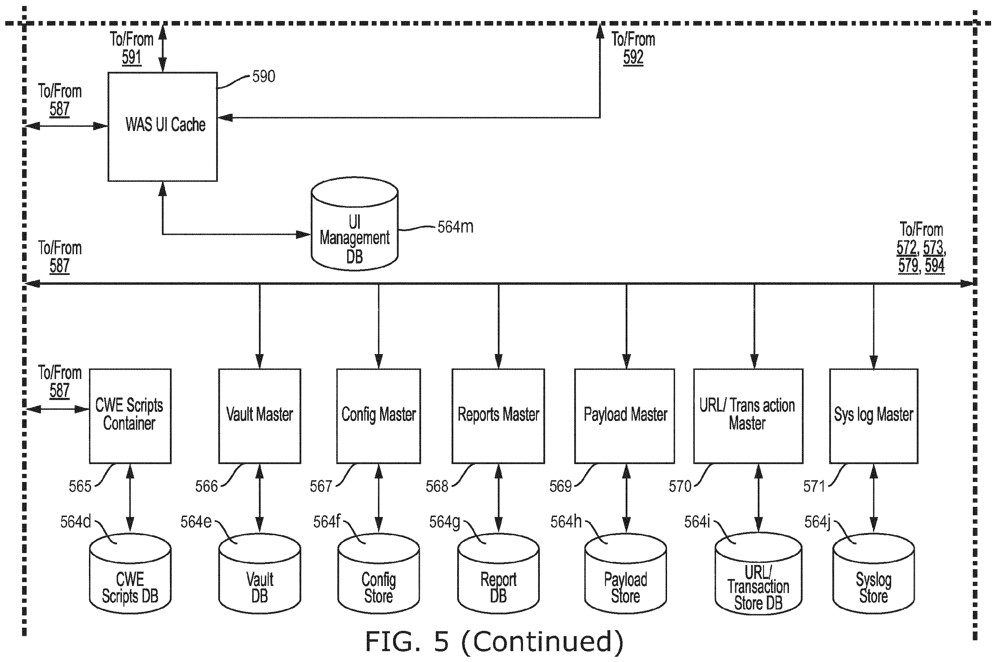

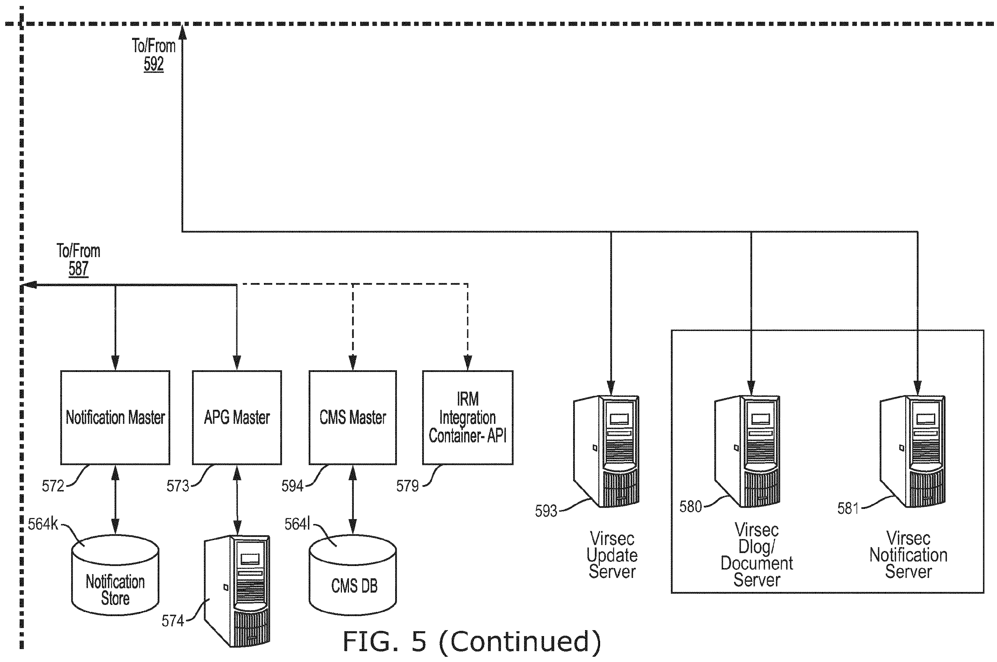

FIG. 5 is a block diagram of a system 560 for identifying vulnerabilities in an application according to an embodiment. As can be seen in FIG. 5, the system 560 via the WAS master 561 and WAS slaves 562a, 562b, and 562n, can fuzz many applications 563a-f simultaneously with many users. The applications 563a-f are part of business units 576a-c. An organization can have several business units, and each business unit can have various applications. The system 560 supports multi-tenancy to cater to multiple business units 576a-c (with their software infrastructure 595) and the business unit's 576a-c applications 563a-f by having a slave 562a-n per business unit managed by the WAS Master 561. WAS Master 561 also supports RBACs so that users from a specific business unit can only view the applications under that business unit.

The system 560 leverages many databases, 564a-n. Specifically, the slave databases 564a-c, CWE scripts database 564d, vault database 564e, configuration database 564f, report database 564g, payload database 564h, URL/transaction database 564i, syslog database 564j, notification database 564k, central management system database 564l, user interface management database 564m, and AD server database 564n. The system 560 also includes the database master 588. The WAS 560 master database 588 is a highly available database server with multiple slave databases (564a-564c), each serving a different business unit to divide the load.

The CWE scripts container 565 allows the system 560 to ingest scripts that can generate payloads of specific CWEs, such as those described at https://cwe.mitre.org/data/definitions/699.html. The system 560 also uses a vault 566 with the associated vault database 564e to store authentication keys for other tools that use its APIs and for any application credentials and authentication keys the system 560 needs to use to exercise APIs of other tools. The config master 567 and associated database 564f holds runtime configuration data for applications. The reports master 568 stores reports in the reports database 564g. Highly complex payloads on a per CAPEC (as described at https://capec.mitre.org/data/definitions/1000.html) basis are stored by the payload master 569 in the payload store 564h. This is unique because not all payloads are suited for specific CWEs. The URL and transaction master 570 with associated database 564i allows single or multiple URLs and transactions to be played out in the correct sequence. The SYSLOG master 571 and database 564j stores any notifications that are generated at various stages both by the UI code as well as the crawler, test Exerciser, report generator, and any other elements of the system 560. Notification master 572 and database 564k allows users to watch for recent high value events that need attention and once handled, the events are archived. The system 560 also uses the Application Protection gateway (APG) master 573 and server 574 to store compensating controls on a per application basis. The APG 573 protects the application when it is deployed with known bugs. Compensating controls make sure that the known issues applications cannot be exploited during periods bugs are being addressed. System 560 also includes central monitoring system (CMS) 594 with associated database 564l.

In the system 560, the Integrated Risk Management (IRM) Integration Container 579 provides an API that gives leverage to the user to integrate the system 560 with the various risk management software present in the user's organization to determine the risk scores of the assets that the organization possesses.

The system 560 includes the Update Server 593 which allows the system 560 to perform automatic updates by fetching all the respective artifacts from the Update Server 593 via the internet. Likewise, the system 560 includes the blog/document server 580 that contains all the WAS 560 documentation, including an Installation Guide, Operations Guide, Troubleshooting Guide, etc. that the users can access via the Internet. Further, the system 560 includes the Notification server 581. The notification server 581 allows user to initiate system 560 related queries/ issues to a Support Team via the Notification Server 581.

The system 560 can integrate into the CICD pipeline offered by many tools such as Jenkins and GitLab, amongst others. The WAS 560 also communicates, via the network 592, with an update server. This communication allows the system 560 to be remotely upgraded. The system 560 UI, implemented using the UI cache 590, UI screen 591 and UI database 564m, can access documentation and wiki pages to show the latest troubleshooting guides. The system 560 also integrates with prominent Directory Servers for authentication. It also uses certificates for the WAS UI to communicate with the WAS backend. The WAS UI 591 can control the whole flow of the components in the system 560. A user can use the WAS UI 591 as a starting point to enter inputs, kick-off scans, track progress and get reports. WAS UI 591 can dump the information provided by a user into a WAS config file which the other components in the system 560 will use to run respective tasks.

The system 560 UI leverages a mem-cache server 590. The system 560 UI does not need to reach the backend server for retrieving data from the UI database 564m. The system 560 can cache data that does not change rapidly in the said mem-cache server 590. The system 560 also offers an API Server 587 that can rate control API requests that other systems may be making via API. The master API server 587 can contain many rest APIs that help the user interact with the system 560 backend. The rest API server is a separate, highly available server that gives users real-time updates on the progress of the system 560's tasks.

The system 560 stores reports in JSON, PDF and/or HTML formats. JSON reports allow users of the system 560 to retrieve the data via APIs. PDF and HTML reports allow users to interact with the system 560 as needed.

The system 560 can implement user roles 582-586. To provide such functionality, the system 560 associates a specific role 582-586 to each user for the access control. As such, in the system 560, each user can only perform actions based on the privileges defined as per the role. In the system 560, the roles are DevOps 582, Application Owners 583, CISO 584, SecOps 586, and Super Admin 585.

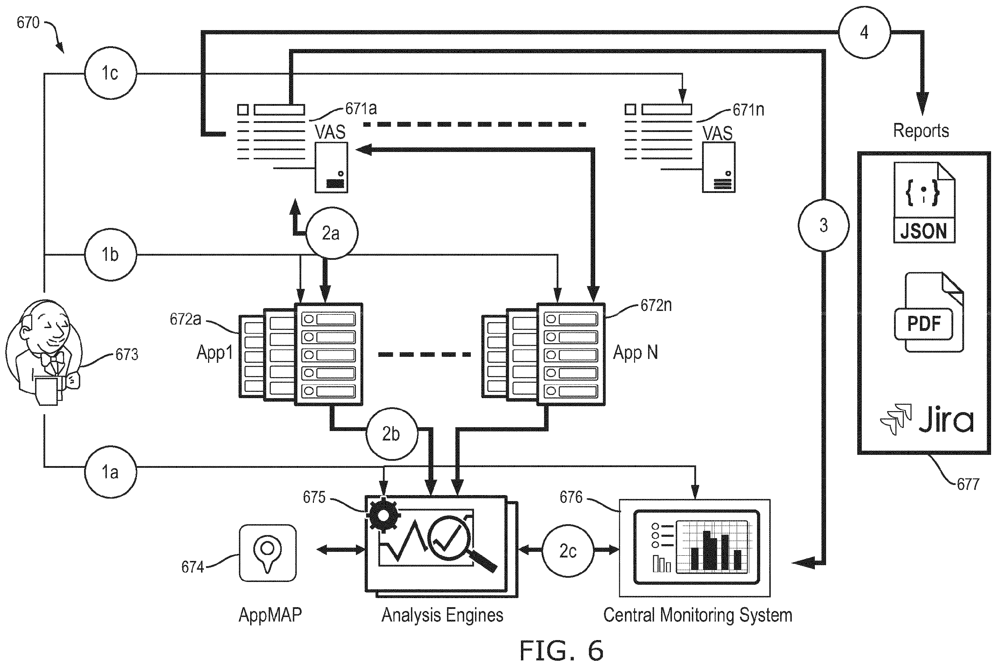

FIG. 6 illustrates a system 670 that incorporates embodiments 671a and 671n configured to interact with continuous integration / continuous development (CICD) pipelines. In the system 670, CICD pipelines interact with the embodiments (i.e., WASs) 671a and 671n in order to automatically use the embodiments 671a and 671n to identify vulnerabilities in the applications 672a and 672n and obtain reports 677 showing the results of the vulnerability identification.

In one such implementation of the system 670, at step 1a Jenkins 673 or any other CI/CD server will initiate job (application) creation in VSP CMS (Central Monitoring System 676) with necessary information. This is utilized to monitor threats. At step 1b the Jenkins server 673 deploys the application 672a-n and makes it ready for testing by WAS 671a-n. In turn, at step 1c, Jenkins server 673 initiates WAS 671a-n scan and tests the application 672an.

For step 2a, WAS 671a-n fetches URLs from the URL store and payloads from the payload store. WAS 671a-n then fuzzes the application 672a-n with every URL and parameter.

At step 2b all events are captured by VSP instrumentation of the Application server and sent to VSP AE (Analysis Engine 675). AE 675 performs analysis of the collected events (using app map 674) and reports incidents (if any) to CMS 676. Thus, at step 2c CMS 676 (a central dashboard of VSP) collects incidents and manages configuration of VSP.

WAS 671a fetches all the collected incidents from CMS 676 at step 3 and, in turn, at step 4, WAS 671a exports the collected incidents to multiple report 677 formats (such as PDF, HTML) and creates JSON reports for external consumption.

Embodiments, e.g., the method 100, system 220, and system 560, have numerous advantages compared to existing fuzzing methodologies.

Embodiments provide the ability to enumerate more dynamic web pages. By understanding each field in HTTP requests, e.g., GET/ POST request, embodiments can exercise more parts of applications than existing methodologies. Embodiments also can fuzz each field with CWE specific payloads (including some encoded versions of the specific payload) to see if business logic performs basic and enhanced (due to encoding) validation for that CWE payload. Embodiments can also cooperate with instrumentation functionality provided by the Applicant, which means embodiments can understand more than HTTP responses to the HTTP request, but can also determine other responses, e.g., interpreter and database responses. In this way, embodiments observe facts and do not use conjectures in making (non-)attack decisions. This results in embodiments not having false positives.

Embodiments can also generate reports in minutes. In the case of existing methods, ~70% of results are false positives and vulnerability reports need to be curated manually before they can be presented to the end-user (application developer). This curation can take weeks, making the usefulness of such reports very low. This often leads to a flawed application being deployed and this application being attacked.

Reports provided by embodiments also provide highly actionable data for end-users (developers) which cuts down the time they need to fix any bugs.

Also advantageously, embodiments can implement an Interactive Authentication Feature that enables embodiments to capture authentication requests for all the applications including dynamic single page applications (SPA) applications. In many applications, especially SPA applications, there is only one URL but hundreds of JavaScript (hereafter called a hive). Individual JavaScript are triggered by configuration information as well as raw data in the HTTP packet. Given this scenario, it may become impossible for an algorithm to figure out which configuration flag will cause which JavaScript in the JavaScript hive to respond. As such, embodiments can provide a manual Interactive Authentication mode.

Embodiments also have high application code coverage (Wivet score) for fuzzing because embodiments can rely on various ways to extract URLs such as automated crawling, webserver logs, and decompiling jars to obtain URLs from source code, amongst other examples. Embodiments provide a CAPEC (https://capec.mitre.org/) based payload store to cover every attack simulation. This allows embodiments to assign CVSS scores. Embodiments also provide unique and deterministic ways to discover vulnerabilities with approximately zero false positives. Advantageously, embodiments can be integrated with Applicant's Integrated Risk Management (IRM) (further described at https://www.gartner.com/en/information-technology/glossary/integrated-risk-management-irm) that performs SCA and IAST scans, de-dupes, and generates highly actionable reports.

Further still, embodiments are CICD enabled. Because embodiments do not generate false positives, reports generated by embodiments can be used immediately. Embodiments also generate compensating controls for protecting against known vulnerabilities and allows developers to re-run reports. Further, the generated reports provide highly actionable remediation information and can pinpoint exact parameters in URLs that are vulnerable.

Embodiments also allow users to send serialized data for fuzzing and can fuzz many applications simultaneously. Contemporary tools typically hit a URL twice, once without fuzz and once with fuzz to determine if there is an attack. This leads existing methods to get very high false positive ratios. Embodiments can be configured to not hit a URL twice to determine if there is an attack. Further, false positives are not a problem for embodiments because embodiments have deep instrumentation and can observe actual state in the application. Further, the amount of time taken to complete fuzzing gets cut down in half since every URL and parameter does not need to be hit twice.

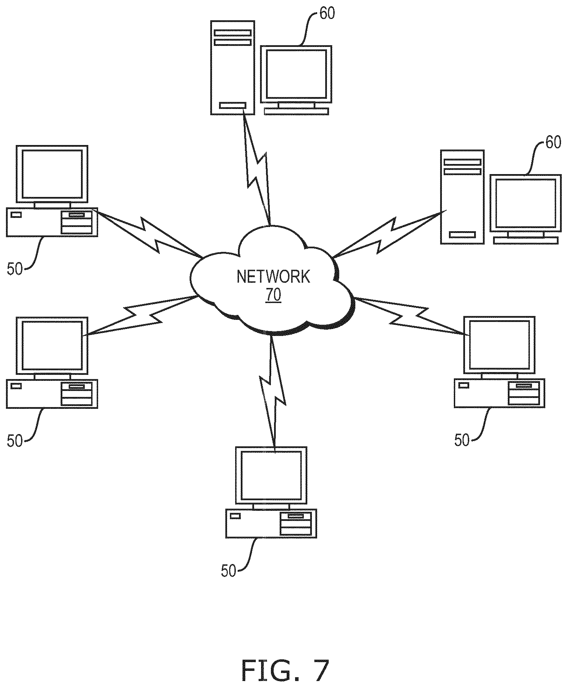

FIG. 7 illustrates a computer network or similar digital processing environment in which embodiments of the present disclosure may be implemented.

Client computer(s)/devices 50 and server computer(s) 60 provide processing, storage, and input/output devices executing application programs and the like. The client computer(s)/devices 50 can also be linked through communications network 70 to other computing devices, including other client devices/processes 50 and server computer(s) 60. The communications network 70 can be part of a remote access network, a global network (e.g., the Internet), a worldwide collection of computers, local area or wide area networks, and gateways that currently use respective protocols (TCP/IP, Bluetooth^{®}, etc.) to communicate with one another. Other electronic device/computer network architectures are suitable.

Client computers/devices 50 and/or servers 60 may be configured, alone or in combination, to implement the embodiments described herein, e.g., the method 100, amongst other examples. The server computers 60 may not be separate server computers but part of cloud network 70.

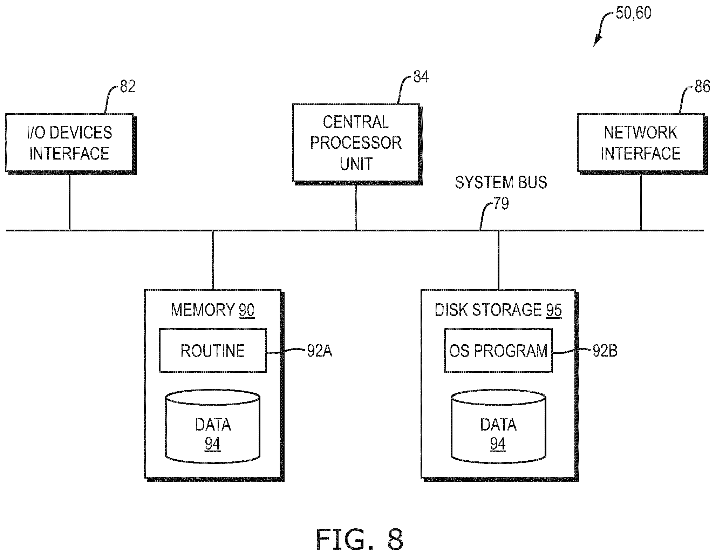

FIG. 8 is a diagram of an example internal structure of a computer (e.g., client processor/device 50 or server computers 60) in the computer system of FIG. 7. Each computer 50, 60 contains a system bus 79, where a bus is a set of hardware lines used for data transfer among the components of a computer or processing system. The system bus 79 is essentially a shared conduit that connects different elements of a computer system (e.g., processor, disk storage, memory, input/output ports, network ports, etc.) that enables the transfer of information between the elements. Attached to the system bus 79 is an input/output (I/O) device interface 82 for connecting various input and output devices (e.g., keyboard, mouse, displays, printers, speakers, etc.) to the computer 50, 60. A network interface 86 allows the computer to connect to various other devices attached to a network (e.g., network 70 of FIG. 7). Memory 90 provides volatile storage for computer software instructions 92 and data 94 used to implement an embodiment of the present disclosure (e.g., the method 100, amongst others). Disk storage 95 provides non-volatile storage for computer software instructions 92 and data 94 used to implement an embodiment of the present disclosure. A central processor unit 84 is also attached to the system bus 79 and provides for the execution of computer instructions.

Embodiments or aspects thereof may be implemented in the form of hardware including but not limited to hardware circuitry, firmware, or software. If implemented in software, the software may be stored on any non-transient computer readable medium that is configured to enable a processor to load the software or subsets of instructions thereof. The processor then executes the instructions and is configured to operate or cause an apparatus to operate in a manner as described herein.

Further, hardware, firmware, software, routines, or instructions may be described herein as performing certain actions and/or functions of the data processors. However, it should be appreciated that such descriptions contained herein are merely for convenience and that such actions in fact result from computing devices, processors, controllers, or other devices executing the firmware, software, routines, instructions, etc.

It should be understood that the flow diagrams, block diagrams, and network diagrams may include more or fewer elements, be arranged differently, or be represented differently. But it further should be understood that certain implementations may dictate the block and network diagrams and the number of block and network diagrams illustrating the execution of the embodiments be implemented in a particular way.

Accordingly, further embodiments may also be implemented in a variety of computer architectures, physical, virtual, cloud computers, and/or some combination thereof, and, thus, the data processors described herein are intended for purposes of illustration only and not as a limitation of the embodiments.

While example embodiments have been particularly shown and described, it will be understood by those skilled in the art that various changes in form and details may be made therein without departing from the scope of the embodiments encompassed by the appended claims.

## Claims

1. A method of identifying vulnerabilities in a web application, the method comprising:
searching (101) a database to identify payload characteristics for a Hypertext Transfer Protocol, HTTP, request associated with a Uniform Resource Locator, URL, of a web application, wherein the searching comprises (i) searching the database for an HTTP response that occurred prior to the HTTP request and (ii) identifying the payload characteristics based upon the HTTP response that occurred prior to the HTTP request;
obtaining (102) one or more payloads with characteristics corresponding to the identified payload characteristics searching a payload database based on the identified payload characteristics to obtain the one or more payloads with characteristics corresponding to the identified payload characteristics;
sending (103) the HTTP request with the obtained one or more payloads to the URL; and
observing (104) one or more responses to the HTTP request sent with the obtained one or more payloads to determine if the web application includes one or more vulnerabilities.

2. The method of Claim 1 further comprising:
in response to determining the web application includes the one or more vulnerabilities, performing one or more protection, compensation control, or remediation, actions.

3. The method of Claim 1 wherein the HTTP response is immediately prior to the HTTP request in hierarchical operation of the web application.

4. The method of Claim 1 wherein each of the obtained one or more payloads corresponds to a respective vulnerability.

5. The method of Claim 4 wherein sending the HTTP request with the obtained one or more payloads tests if the web application is susceptible to each respective vulnerability.

6. The method of Claim 1 wherein the characteristics include at least one of: type and format.

7. The method of Claim 1 further comprising:
generating a report indicating results of the observing.

8. The method of Claim 7 wherein the report indicates one or more elements of the web application that are susceptible to the one or more vulnerabilities.

9. The method of Claim 8 wherein the one or more elements include at least one of: a field, variables in request lines, parameters passed with a request line, and parameters passed through headers.

10. The method of Claim 1 wherein the HTTP request is at least one of: a get type request and a post type request.

11. The method of Claim 1 wherein a given payload of the obtained one or more payloads is a common weakness enumeration, CWE, payload.

12. A system for identifying vulnerabilities in a web application, the system comprising:
a processor; and
a memory with computer code instructions stored thereon, the processor and the memory, with the computer code instructions, being configured to cause the system to perform the method of any of Claims 1-11.

13. A computer program product for identifying vulnerabilities in a web application, the computer program product comprising:
one or more non-transitory computer-readable storage devices and program instructions stored on at least one of the one or more storage devices, the program instructions, when loaded and executed by a processor, cause an apparatus associated with the processor to perform the method of any of Claims 1-11.

## Patentansprüche

1. Verfahren zum Identifizieren von Schwachstellen in einer Webanwendung, wobei das Verfahren umfasst:
Durchsuchen (101) einer Datenbank zum Identifizieren von Nutzlasteigenschaften für eine Hypertext-Übertragungsprotokoll-Anfrage, HTTP-Anfrage, die mit einer Webadresse, URL, einer Webanwendung assoziiert ist, wobei das Durchsuchen (i) ein Durchsuchen der Datenbank nach einer HTTP-Antwort, die vor der HTTP-Anfrage aufgetreten ist, und (II) ein Identifizieren der Nutzlasteigenschaften basierend auf der HTTP-Antwort umfasst, die vor der HTTP-Anfrage aufgetreten ist;
Erhalten (102) einer oder mehrerer Nutzlasten mit Eigenschaften, die den identifizierten Nutzlasteigenschaften entsprechen, Durchsuchen einer Nutzlastdatenbank basierend auf den identifizierten Nutzlasteigenschaften, um die eine oder die mehreren Nutzlasten mit Eigenschaften zu erhalten, die den identifizierten Nutzlasteigenschaften entsprechen;
Senden (103) der HTTP-Anfrage mit der einen oder den mehreren erhaltenen Nutzlasten an die URL; und
Beobachten (104) einer oder mehrerer Antworten auf die HTTP-Anfrage, die mit der einen oder den mehreren erhaltenen Nutzlasten gesendet wurden, um zu ermitteln, ob die Webanwendung eine oder mehrere Schwachstellen aufweist.

2. Verfahren nach Anspruch 1, das ferner umfasst:
als Reaktion auf das Ermitteln, dass die Webanwendung die eine oder mehreren Schwachstellen aufweist, Durchführen einer oder mehrerer Schutz-, Kompensationskontroll- oder Abhilfemaßnahmen.

3. Verfahren nach Anspruch 1, wobei sich die HTTP-Antwort in einem hierarchischen Betrieb der Webanwendung unmittelbar vor der HTTP-Anfrage befindet.

4. Verfahren nach Anspruch 1, wobei jede der einen oder mehreren erhaltenen Nutzlasten einer jeweiligen Schwachstelle entspricht.

5. Verfahren nach Anspruch 4, wobei das Senden der HTTP-Anfrage mit der einen oder den mehreren erhaltenen Nutzlasten prüft, ob die Webanwendung für jede entsprechende Schwachstelle anfällig ist.

6. Verfahren nach Anspruch 1, wobei die Eigenschaften mindestens eine aufweisen von: Typ und Format.

7. Verfahren nach Anspruch 1, das ferner umfasst:
Erzeugen eines Berichts, der die Ergebnisse der Beobachtung anzeigt.

8. Verfahren nach Anspruch 7, wobei der Bericht ein oder mehrere Elemente der Webanwendung anzeigt, die für die eine oder die mehreren Schwachstellen anfällig sind.

9. Verfahren nach Anspruch 8, wobei das eine oder die mehreren Elemente mindestens eines aufweisen von: einem Feld, Variablen in Anfragezeilen, Parametern, die mit einer Anfragezeile übergeben werden, und Parametern, die mit einer Kopfzeile übergeben werden.

10. Verfahren nach Anspruch 1, wobei die HTTP-Anfrage mindestens eine ist von: einer Get-Typ-Anfrage und einer Post-Typ-Anfrage.

11. Verfahren nach Anspruch 1, wobei eine gegebene Nutzlast der einen oder mehreren erhaltenen Nutzlasten eine Nutzlast einer gemeinsamen Schwachstellenaufzählung, CWE-Nutzlast, ist.

12. System zum Identifizieren von Schwachstellen in einer Webanwendung, wobei das System umfasst:
einen Prozessor; und
einen Speicher, in dem Computercodeanweisungen gespeichert sind, wobei der Prozessor und der Speicher mit den Computercodeanweisungen konfiguriert sind, um das System zu veranlassen, das Verfahren nach einem der Ansprüche 1 bis 11 durchzuführen.

13. Computerprogrammprodukt zum Identifizieren von Schwachstellen in einer Webanwendung, wobei das Computerprogrammprodukt umfasst:
eine oder mehrere nicht-flüchtige computerlesbare Speichervorrichtungen und Programmanweisungen, die in mindestens einer der einen oder mehreren Speichervorrichtungen gespeichert sind, wobei die Programmanweisungen, wenn sie von einem Prozessor geladen und ausgeführt werden, veranlassen, dass eine Einrichtung, die mit dem Prozessor assoziiert ist, das Verfahren nach einem der Ansprüche 1 bis 11 durchführt.

## Revendications

1. Procédé d'identification de vulnérabilités dans une application Web, le procédé comprenant :
une recherche (101) dans une base de données pour identifier des caractéristiques de charge utile pour une requête de protocole de transfert en hypertexte, HTTP, associée à un localisateur uniforme de ressources, URL, d'une application Web, la recherche comprenant (i) la recherche dans la base de données d'une réponse HTTP qui a eu lieu avant la requête HTTP et (ii) l'identification des caractéristiques de charge utile sur la base de la réponse HTTP qui a eu lieu avant la requête HTTP ;
l'obtention (102) d'une ou plusieurs charges utiles dont les caractéristiques correspondent aux caractéristiques de charge utile identifiées en cherchant dans une base de données de charge utile d'après les caractéristiques de charge utile identifiées, pour obtenir la ou les charges utiles dont les caractéristiques correspondent aux caractéristiques de charge utile identifiées ;
l'envoi (103) de la requête HTTP avec la ou les charges utiles obtenues à l'URL ; et
l'observation (104) d'une ou de plusieurs réponses à la requête HTTP envoyée avec la ou les charges utiles obtenues afin de déterminer si l'application Web comprend une ou plusieurs vulnérabilités.

2. Procédé selon la revendication 1 comprenant en outre :
en réponse à la détermination du fait que l'application Web comprend une ou plusieurs vulnérabilités, la réalisation d'une ou de plusieurs actions de protection, de contrôle de compensation ou de correction.

3. Procédé selon la revendication 1, la réponse HTTP étant immédiatement antérieure à la requête HTTP dans le fonctionnement hiérarchique de l'application Web.

4. Procédé selon la revendication 1, la ou chacune des charges utiles obtenues correspondant à une vulnérabilité respective.

5. Procédé selon la revendication 4, l'envoi de la requête HTTP avec la ou les charges utiles obtenus testant si l'application Web est sensible à chaque vulnérabilité respective.

6. Procédé selon la revendication 1, les caractéristiques comprenant au moins un élément parmi : le type et le format.

7. Procédé selon la revendication 1 comprenant en outre :
la génération d'un rapport indiquant les résultats de l'observation.

8. Procédé selon la revendication 7, le rapport indiquant un ou plusieurs éléments de l'application Web qui sont sensibles à la ou aux vulnérabilités.

9. Procédé selon la revendication 8, le ou les éléments comprenant au moins un élément parmi : un champ, des variables dans des lignes de requête, des paramètres transférés avec une ligne de requête, et des paramètres transférés à travers des en-têtes.

10. Procédé selon la revendication 1, la requête HTTP étant au moins l'une de : une requête de type GET et une requête de type POST.

11. Procédé selon la revendication 1, une charge utile donnée de la ou des charges utiles obtenues étant une charge utile d'énumération de faiblesse commune, CWE.

12. Système d'identification de vulnérabilités dans une application Web, le système comprenant :
un processeur ; et
une mémoire sur laquelle sont stockées des instructions de code informatique, le processeur et la mémoire, avec les instructions de code informatique, étant configurés pour amener le système à réaliser le procédé de l'une quelconque des revendications 1 à 11.

13. Produit-programme informatique d'identification de vulnérabilités dans une application Web, le produit-programme informatique comprenant :
un ou plusieurs dispositifs de stockage non transitoire lisibles par ordinateur et des instructions de programme stockées sur au moins un parmi le ou les dispositifs de stockage, les instructions de programme, lorsqu'elles sont chargées et exécutées par un processeur, amenant un appareil associé au processeur à réaliser le procédé selon l'une quelconque des revendications 1 à 11.
